## Europäisches Patentamt
## European Patent Office
## Office européen des brevets

(19)

(11) Veröffentlichungsnummer: **0 138 051**
**B1**

(12) # EUROPÄISCHE PATENTSCHRIFT

(45) Veröffentlichungstag der Patentschrift:
20.07.88

(51) Int. Cl.⁴: **C 09 D 7/14, C 09 D 5/44**

(21) Anmeldenummer: **84110804.6**

(22) Anmeldetag: **11.09.84**

(54) Verfahren zur Herstellung von lagerfähigen Konzentraten und deren Verwendung zur Herstellung von Überzugsmitteln.

(30) Priorität: **14.09.83 DE 3333073**

(43) Veröffentlichungstag der Anmeldung:
**24.04.85 Patentblatt 85/17**

(45) Bekanntmachung des Hinweises auf die Patenterteilung:
**20.07.88 Patentblatt 88/29**

(84) Benannte Vertragsstaaten:
**AT BE CH DE FR GB IT LI NL**

(56) Entgegenhaltungen:
**EP-A-0 043 104**
**DE-A-2 248 836**
**US-A-3 970 621**
**US-A-4 230 552**

(73) Patentinhaber: **Herberts Gesellschaft mit beschränkter Haftung, Christbusch 25, D-5600 Wuppertal 2 (DE)**

(72) Erfinder: **Doebler, Klaus Peter, Bahnhofstrasse 27, D-5608 Radevormwald (DE)**
Erfinder: **Gräf, Knut, In der Marpe 35, D-4320 Hattingen (DE)**
Erfinder: **Jäger, Kurt Edgar, Ravensbergerstrasse 9, D-5600 Wuppertal 1 (DE)**
Erfinder: **Johannsen, Friedrich, Dipl.- Ing., Ratinger Strasse 95, D-5628 Heiligenhaus (DE)**
Erfinder: **Ritz, Jürgen, Dr., Am Hipperich 68, D-6500 Mainz- Mombach (DE)**
Erfinder: **Saatweber, Dietrich, Dr., Forststrasse 22, D-5600 Wuppertal 21 (DE)**

(74) Vertreter: **Türk, Gille, Hrabal, Bruckner Strasse 20, D-4000 Düsseldorf 13 (DE)**

## Beschreibung

Die Erfindung betrifft ein Verfahren zur Herstellung von lagerfähigen Konzentraten enthaltend Wasser, nicht gelöste feinverteilte Kunstharze in einer Menge von 10 bis 60 Gew.-%, bezogen auf das Gesamtgewicht des Konzentrats, und gelöste Kunstharze in einer Menge von 0.5 bis 10 Gew.-% Festkörper, bezogen auf das Gesamtgewicht des Konzentrats, als Lackbindemittel, Pigmente sowie gegebenenfalls lacktechnische Zusatzstoffe und gegebenenfalls organische Lösungsmittel durch Naßvermahlung in mehreren Stufen. Die Erfindung betrifft außerdem die Verwendung der Konzentrate zur Herstellung von Überzugsmitteln.

Aus der DE-A-22 48 836 ist bekannt, elektrophoretisch abscheidbare Lacke auf Basis einer wässerigen Suspension von wasserunlöslichen Harzen und Pigmenten in einem kationischen Bindemittel herzustellen. Wie in der DE-A-30 24 158 näher beschrieben, weist dieses Verfahren jedoch eine Reihe gravierender Mängel in der Herstellungstechnologie auf. In der DE-A-30 24 158 sollen diese Nachteile dadurch vermieden werden, daß auf das Extrudieren der festen Rezeptbestandteile, wie wasserunlösliche Harze und Pigmente, verzichtet wird und anstelle dieser Technologie die Einzelkomponenten der Rezeptur gemeinsam in einer oder mehreren Stufen Vermahlen werden.

Diese Technologie hat jedoch folgenden Nachteil: Wenn gemäß DE-A-30 24 158, Seite 13, Zeilen 19 bis 21, die Zerkleinerung nur in einer Stufe vorgenommen wird, muß diese Stufe zwangsläufig naß durchgeführt werden. Da jedoch die Rohstoffe üblicherweise in Chips oder in Form von Granulaten mit Kantenlängen von 0.5 bis 20 mm vorliegen, ist dieser Arbeitsgang nur in unvertretbar langer Zeit und unter großem Energieaufwand zu bewerkstelligen. Zudem sind die meisten der im Markt befindlichen Mahlaggregate nicht in der Lage, den Schritt von 20 mm hinunter auf 5 bis 15 µm zu vollbringen. Deshalb wird gemäß DE-A-30 24 158 in den Beispielen ein vorvermahlenes festes Kunstharz eingesetzt. Die Trockenmahlstufe ist mit vielen für das Trockenvermahlen üblichen Nachteilen verbunden, die auch in der DE-A-30 24 158 erwähnt werden. Außerdem erfüllen die gemäß DE-A-30 24 158 hergestellten Konzentrate nicht die heute üblicherweise gestellten Anforderungen an die Lagerfähigkeit von mehreren Monaten, sondern sie bilden schon nach kurzer Zeit Bodensätze, die meist nicht mehr aufrührbar sind. Für die Anwendung sind aber sogar aufrührbare Bodensätze unerwünscht, da die Verarbeiter die Konzentrate ohne zusätzliche Manipulierung pumpen wollen. Die aus solchen Konzentraten hergestellten Lacke werden als Grundierungen eingesetzt, die oft noch mit Decklacksystemen versehen werden. Es kann dabei zu einer Kraterneigung kommen. Nach der DE-A-22 48 836 wird nur eine Trockenvermahlung mit den damit verbundenen im Stand der Technik bekannten Nachteilen durchgeführt, wobei andererseits eine Kraterneigung bei der Durchführung einer Decklackierung nicht auftritt.

Wenn man übliche Naßvermahlungen gemäß dem Stand der Technik von Konzentraten vornimmt, die nicht gelöste Kunstharze enthalten, kommt es zu starken Viskositätsanstiegen, teils hervorgerufen durch zunehmende Kornfeinheit (Zunahme der Gesamtoberfläche der Feststoffe), teils durch Bildung von Mikroschäumen. Dies führt in geschlossenen Mahlsystemen nicht nur zu einer schlechten Mahleffizienz (dämpfende Wirkung beim Aufprall der Mahlkörper auf das Mahlgut), sondern einhergehend damit zum Auftreten sehr hoher Scherkräfte, welche wiederum einen hohen Anstieg der Temperatur in der Mahlkammer bewirken. Aufgrund relativ niedriger Glasübergangstemperaturen der Harze kommt es dann in der Mühle zum Verbacken der Harzteilchen und letztlich zu einer Blockierung der Mühle. Das Problem des Vikositätsanstiegs ist umso größer, je höher der Festkörper dieser Konzentrate liegt. Dieses Problem kann auch nicht dadurch gelöst werden, daß man den Festkörper entsprechend reduziert, weil hierdurch die Tendenz zur Bildung von Bodensätzen verstärkt wird.

Aufgabe der Erfindung ist es, die geschilderten Probleme, die einer praxisgerechten Produktion entgegenstehen, in ökonomisch und ökologisch sinnvoller Art zu lösen.

Gegenstand der Erfindung ist demgemäß ein Verfahren zur Herstellung von lagerfähigen Konzentraten enthaltend Wasser, nicht gelöste feinverteilte Kunstharze in einer Menge von 10 bis 60 Gew.-%, bezogen auf das Gesamtgewicht des Konzentrats, und gelöste Kunstharze in einer Menge von 0.5 bis 10 Gew.-% Festkörper, bezogen auf das Gesamtgewicht des Konzentrats, als Lackbindemittel, Pigmente, sowie gegebenenfalls lacktechnische Zusatzstoffe und gegebenenfalls organische Lösungsmittel durch Naßvermahlung in mehreren Stufen, welche Konzentrate zur Herstellung von Lacken mit flüssigen Lackbindemitteln und gegebenenfalls üblichen lacktechnischen Zusatzstoffen, Wasser und gegebenenfalls organischen Lösungsmitteln verdünnt werden, das dadurch gekennzeichnet ist, daß

a) in einer ersten Mahlstufe die nicht gelösten Kunstharze, von denen mindestens 80 Gew.-% mit einer Teilchengröße von 500 µm bis 20 mm vorliegen, im Gemisch mit Wasser, wobei der Gehalt an Feststoffen 30 bis 70 Gew.-%, bezogen auf die Gesamtmenge des Gemisches beträgt, sowie 0 bis 60 Gew.-% der gelösten ionischen Kunstharze (Festkörper) bis zu einer Teilchengröße von weniger als 200 µm, vorzugsweise von weniger als 100 µm vermahlen werden,

b) 40 bis 100 Gew.-% der gelösten ionischen Kunstharze (Festkörper) und Pigmente zugesetzt werden und das Gemisch in einer zweiten Mahlstufe vermahlen wird, bis 95 % aller Teilchen eine Teilchengröße von weniger als 15 μm aufweisen.

Bei dem erfindungsgemäßen Verfahren werden die festen Ausgangsharze als Granulate und/oder Chips mit Kantenlängen von etwa 0.5 bis 20 mm unter Rühren in Wasser eingetragen, sodaß ein Festkörper zwischen 30 und 70 Gew.-%, vorzugsweise von 40 bis 50 Gew.-% resultiert, wobei dem Wasser Entschäumer, z. B. der nichtionogenen Verbindungsklassen mit niedrigem Aethoxylierungsgrad, wie Fettalkoholpolyglykoläther (Genapol C, O, T, X - eingetragenes Warenzeichen) oder Polymerisate aus Aethylen- und Propylenoxid (z. B. Genapol PF 10) oder Nonylphenolpolyglykoläther (z. B. Arkopal N-040 - eingetragenes Warenzeichen) oder Tributylphenolpolyglykoläther (z. B. Sapogenat T-040 - eingetragenes Warenzeichen) oder aber Produkte aus der Verbindungsklasse der Acetylenglykole (z. B. Surfynol 104 - eingetragenes Warenzeichen) und deren Aethoxylierungsprodukte (z. B. Surfynole der 400er Reihe, wie Surfynol 440) zugesetzt werden können.

Es wird in einer ersten Mahlstufe bis zu der oben definierten Korngröße vermahlen. Zweckmäßig wird in der ersten Stufe in Rotor/Statormühlen, insbesondere Kolloidmühlen vermahlen. Die Vermahlung erfolgt vorzugsweise unter Kühlung des Mahlaggregats mittels Kühlsole, um die durch die hohen Scherkräfte auftretende Wärmetönung abzuführen. Trotz der Anwesenheit von Entschäumern ist manchmal das Einziehen und Zerschlagen von Luft in der Mühle nicht ganz zu vermeiden. Deshalb ist es bevorzugt, den Mahlvorgang in der ersten Mahlstufe unter vermindertem Druck von 50 bis 800 mbar, vorzugsweise von 200 bis 500 mbar durchzuführen. Insgesamt resultieren Materialien, welche je nach Festkörper mehr oder minder hochviskos sind. Ein entscheidendes Problem liegt aber darin, in der zweiten Mahlstufe die Viskosität so gering zu halten, daß eine ausreichende Vermahlung möglich ist. Dies wird erfindungsgemäß in überraschend einfacher Weise dadurch gelöst, daß als gelöste Kunstharze ionische Kunstharze eingesetzt werden. Unter gelösten ionischen Kunstharzen werden solche verstanden, die in Wasser, gegebenenfalls nach Zusatz von organischen Lösungsmitteln, im Konzentrat in gelöster oder emulgierter Form vorliegen, wie dies dem Fachmann auf diesem technischen Gebiet bekannt ist. Dem Fachmann ist bekannt, daß Menge und Art der organischen Lösungsmittel so ausgewählt werden müssen, daß die im Konzentrat enthaltenen unlöslichen feinverteilten Kunststoffe nicht angelöst werden.

Ionische Kunstharze sind z. B. solche, die ihre Wasserlöslichkeit oder Wasserverdünnbarkeit durch anorganische oder organische Neutralisationsmittel erlangen, mit welchen sie teil-, voll- oder überneutralisiert werden.

Kunstharze mit basischen Gruppen sind z. B. mit Phosphorsäure, sauren Phosphorsäureestern, Ameisensäure, Essigsäure, Propionsäure und/oder Milchsäure, saure Gruppen enthaltende Kunstharze z. B. mit Natronlauge, Kalilauge, Ammoniak, Aminen und/oder Alkanolaminen, wie Diethylamin, Triethylamin, Ethylendiamin, Diethylentriamin, Diisopropanolamin, Dimethylethanolamin, in die wasserverdünnbare Form überführbar. Die Kunstharze können gesättigt oder ungesättigt sein. Beispiele sind modifizierte Epoxidharze mit Aminogruppen, mit Mannich-Basen modifizierte Epoxidharze, selbsthärtende urethanmodifizierte Epoxidharz-Amin-Addukte, ungesättigte Epoxidharz Amin-Addukte, Polyester, Maleinatöle aus natürlichen Ölen (Leinöl, Holzöl, Ricinenöl, Fischöl) oder synthetischen ungesättigten Ölen (Butadienöl), Phenolharze, Aminoharze, blockierte Isocyanatharze und Acrylatharze.

Es können anionische oder kationische gelöste Kunstharze eingesetzt werden, wobei die für den jeweiligen Verwendungszweck der aus den Konzentraten hergestellten Lacke geeigneten kationischen und anionischen Harze verwendet werden. Wesentlich für die Erfindung ist jedoch, daß diese Harze schon während des Vermahlungsprozesses, wie oben definiert, zugesetzt werden und nicht erst nach dem Vermahlen der nicht gelösten Kunstharze bis zum für den endgültigen Einsatz erforderlichen Vermahlungsgrad. Der Einsatz von ionischen gelösten Kunstharzen mit der Wirkung, daß diese die Viskosität in den Vermahlungsstufen, insbesondere in der zweiten Vermahlungsstufe, regeln, stellt eine geradezu ideale Methode dar, Konzentrate mit extrem hohem Vermahlungsgrad herstellen zu können, da diese Harze integrierender Bestandteil des daraus hergestellten Lacküberzugsmittel sind. In manchen Fällen kann es erforderlich sein, zusätzlich während des Vermahlens Mittel zuzusetzen, die die Viskosität des Mahlguts vermindern. Diese können verschiedener Art sein. Als wirksam haben sich beispielsweise erwiesen quartäre Ammoniumverbindungen (z. B. Pentaoxäthylstearylammoniumclorid = Genamin KS 5 - eingetragenes Warenzeichen) oder Hexadecyltrimethylammoniumchlorid (= Dodigen 1383 - eingetragenes Warenzeichen) als auch Aminoxäthylate wie Cocosfettaminäthoxylat (Genamin C 200 - eingetragenes Warenzeichen), Talgfettalkoholpolyglykoläther mit 50 mol Aethoxyeinheiten (= Genapol T 500 eingetragenen Warenzeichen) oder Oleylalkoholpolyglykoläther mit 23 Aethoxyeinheiten (Genapol 0-230 - eingetragenes Warenzeichen). Selbstverständlich müssen solche Zusatzstoffe ausgewählt werden, die die späteren Filmeigenschaften nicht negativ beeinflussen. Andererseits muß eine übermäßige Schaumbildung vermieden werden.

Als nicht gelöste Kunstharze werden solche eingesetzt, wie sie auf dem Gebiet der Herstellung von Lacken und von Lackpulver üblich sind, und wie sie im Lehrbuch der Lacke und Beschichtungen, Bd. VIII, Teil 2, 1980, Herausgeber H. Kittel, Verlag W. A. Colomb, im Kapitel "Pulverbeschichtung" beschrieben werden.

Die Harzpulverteilchen dürfen bei den Vermahlungs- und Lagertemperaturen nicht zusammenbacken oder gar verschmelzen.

Wenn aus den Konzentraten ein einbrennbarer Lack hergestellt wird, sollen die Harzpulverteilchen beim Einbrennen schmelzen.

Bei Erfüllung dieser Kriterien sind die Kunstharze für die erfindungsgemäß herstellbaren Konzentrate brauchbar. Das gilt auch für Kunstharze, die noch nicht Stand der Technik sind. Die nicht gelösten und fein verteilten Kunstharze können selbstvernetzend, fremdvernetzend oder nichtvernetzend sein. Sie können Vernetzer oder Härter darstellen, wie sie in der Lackindustrie üblich sind.

Die Kunstharze werden einzeln oder im Gemisch vermahlen. Es sind auch Mischungen möglich, welche vor der Vermahlung durch Verschmelzen erhalten werden. Es können auch Lösungen von mehreren Harzen hergestellt und durch Verdampfen des Lösungsmittels das Gemisch der Harze erhalten werden. Eine besondere Form ist die als Masterbatch bekannte Möglichkeit, Additive in das Kunstharz oder in die Kunstharzmischungen einzuarbeiten, wobei jedoch auf das Extrudieren verzichtet werden kann. Beispiele für die verwendbaren nicht gelösten und fein verteilten Kunstharze, die gesättigt oder ungesättigt und die nichtionischen oder ionischen Charakter haben können, sind Epoxidharze, Epoxid- Amin- Addukte, modifizierte Epoxidharze mit Aminogruppen, selbsthärtende urethanmodifizierte Epoxidharze bzw. Epoxidharz- Amin-Addukte, blockierte Isocyanatharze, Polyurethane, Polyester, mit Mannich-Basen aus Phenolen, Aldehyden und Aminen modifizierte Epoxidharze, Polyamide, Polyether, Acrylatharze, Aminoacrylatharze, Kohlenwasserstoffharze, Cumaronharze, Cumaron- Inden- Harze, Inden-Harze, Polyolefine, harzartige Cellulosederivate, Ketonharze.

Als funktionelle Gruppen in den selbst- und fremdvernetzenden Kunstharzen kommen neben den Epoxid-, Amino-, Isocyanat- und Methylolgruppen vorzugsweise Hydroxylgruppen, aber auch Carboxylgruppen in Betracht.

Nach einer besonderen Ausführungsform des Verfahrens der Erfindung können mehrere unterschiedliche feste Kunstharze jeweils getrennt in den Stufen a) und b) vermahlen und die Mahlgute miteinander vermischt werden. Dies ist besonders dann von Vorteil, wenn aufgrund der physikalischen Eigenschaften der unterschiedlichen zu zerkleinernden Harze für das Vermahlen bis zum gewünschten Vermahlungsgrad unterschiedliche Zeiten erforderlich sind. Ein schwer zu vermahlendes Kunstharz muß also länger vermahlen werden als ein leicht zu vermahlendes Kunstharz. Außerdem ist der Verbraucher bei der Rezeptgestaltung durch Hinzufügen oder Weglassen von Einzelkomponenten flexibler. Das gleiche gilt für Korrekturen an Lackrezepturen durch den Verarbeiter.

Es ist weiterhin möglich, in der Stufe a) und/oder in der Stufe b) lacktechnische Zusatzstoffe und/oder organische Lösungsmittel mit zu vermahlen.

Das Vermahlen in der Stufe b) wird zweckmäßig in Rührwerkskugelmühlen, insbesondere Perlmühlen durchgeführt.

Zweckmäßig ist es weiterhin, daß das Konzentrat 30 bis 50 Gew.-% nicht gelöste fein verteilte Kunstharze enthält. Der Gehalt an gelösten Kunstharzen beträgt zweckmäßig 0.5 bis 5 Gew.-% Festkörper.

Nach Mahlstufe b), d.h. gemäß dem Verfahren der Erfindung wird eine Suspension erhalten, die beim Stehen weiter verdickt und über mehrere Monate lagerstabil ist und nicht absetzt.

Dem gemäß der Erfindung in der Stufe b) erhaltenen Mahlgut können solche feinteiligen Pigmente sowie gegebenenfalls lacktechnische Zusatzstoffe zugemischt werden, die den Vermahlungsvorgang stören würden und/oder nicht vermahlen werden sollen.

Es kann auch wünschenswert sein, die Konzentrate nach dem Vermahlen noch weiter gezielt zu verdicken. Wirksam in dieser Beziehung sind beispielsweise anionenaktive Tenside, wobei schon sehr geringe Mengen eine hohe Wirksamkeit haben. Da diese Verbindungsklassen jedoch auch hochwirksame Schaumbildner darstellen, würde ihr Einsatz während der Mahlvorgänge zu einer starken Schaumbildung führen, die jedoch vermieden werden muß.

Es können dem fertigen Mahlgut auch das Absetzen verhindernde Mittel zugesetzt werden. Ein Zusatz solcher Mittel während der Mahlung würde sich wegen der Einflußnahme auf das rheologische Verhalten verbieten.

Die gemäß der Erfindung hergestellten Konzentrate können zum Abnehmer transportiert werden und dort durch Zugabe von Wasser und/oder wäßrigen Bindemittellösungen sowie sonstigen Zusatzstoffen auf den endgültigen Festkörpergehalt und die endgültige gewünschte Zusammensetzung eingestellt werden. Die Konzentrate werden also zur Herstellung von Überzugsmitteln, insbesondere elektrophoretisch abscheidbaren Überzugsmitteln eingesetzt. Die Überzugsmittel können auch Druckluftspritzen, Airless-Spritzen, Tauchen, Fluten, Trommeln, Zentrifugieren, Gießen, Streichen, Rollen, Spachteln appliziert werden.

Die Konzentrate können Pigmente, Lösungsmittel und Additive enthalten. Unter Pigmenten werden bunte und unbunte, organische und anorganische, in Lösungsmitteln und Bindemitteln praktisch unlösliche Farbmittel verstanden, die im späteren System eine mehr oder weniger hohe Deckkraft aufweisen, z. B. Titandioxid, Ruß, Phthalocyaninblau, Bleisilikat, Strontiumchromat, Kaolin (Aluminiumsilikat), Talkum, Bariumsulfat, Siliciumdioxid. Pigmente mit sehr geringer oder keiner Deckkraft werden auch Füllstoffe genannt. Pigmente mit Teilchengröße unter 5 µm und BET-Oberflächen von über 200 m$^2$/g können wegen Verursachung von stockigen und daher nicht mehr vermahlbaren Konzentraten nur in begrenzten Mengen mit den übrigen Komponenten vermahlen werden. Manchmal ist auch eine Vermahlung wegen einer Schädigung der Pigmentoberfläche nicht durchführbar. In diesen Fällen empfiehlt es sich, diese Pigmente oder die Restmenge dieser Pigmente nach der Vermahlung trocken oder vorzugsweise in Form einer gut verteilbaren Paste einzurühren.

Das Konzentrat kann eine geringe Menge von organischen Lösungsmitteln enthalten. Vorzugsweise werden solche Lösungsmittel verwendet, die gute Lösungsmittel für das gelöste Kunstharz, jedoch Nichtlöser für die nicht gelösten, fein verteilten Kunstharze sind oder zumindest in der im Konzentrat eingesetzten Menge kein Zusammenbacken der Harzpulverteilchen und der nicht gelösten Additive verursachen.

Verwendet können z. B. alkoholische Lösungsmittel, wie Methanol, Ethanol, Propanole, Butanole, Diacetonalkohol, Ethoxyethanol, Butoxyethanol, Ethylenglykol, Propylenglykol, in solchen Mengen, die nicht zur Anlösung der verwendeten Harzpulver führen.

Unter Additiven werden die Substanzen verstanden, welche in relativ kleinen Mengen bestimmte Eigenschaften verbessern oder unerwünschte Eigenschaften verhindern bzw. verringern. Dabei können in diesen Konzentraten solche Additive enthalten sein, die für die Vermahlung oder für die Handhabung beim Vermahlungsprozeß positiv wirken, wie oben beschrieben ist. Darüberhinaus können in das Konzentrat die in der Lackindustrie gebräuchlichen Additive eingearbeitet werden, die von der Art sind, wie sie im Lehrbuch der Lacke und Beschichtungen, Herausgeber H. Kittel, Band III, 1976, Verlag W.A. Colomb, Seite 237 bis 474 beschrieben sind.

Durch die Einarbeitung dieser Additive in die Konzentrate wird z. B. eine optimale Verteilung im Lackfilm erreicht.

Die folgenden Beispiele beschreiben spezielle Ausführungsformen der vorliegenden Erfindung. Für die Beispiele verwendete ionische Harze:

**Herstellungsbeispiel A)**

Kationisches Harz

Gemäß DE-B-22 48 836, Spalte 15, Beispiel 8, werden 800 g eines urethanmodifizierten Epoxidharzes mit einem Urethangehalt von 30 %, einem Molekulargewicht von etwa 1400 bis 1500, einem Epoxidäquivalentgewicht von 650 und einem Hydroxyläquivalentgewicht von 150, 56 g Diethanolamin, 200 g Propanol-2 und 200 g Ethylenglykolmonoethylether 1 Stunde lang bei 80 bis 85° C am Rückflußkühler erhitzt.

Nach Zusatz von 16 g Verlaufmittel und 40 g Propanol-2 wird das Gemisch weitere 2 Stunden am Rückflußkühler erhitzt.

Zu der auf 60° C erkalteten Lösung des urethanmodifizierten Epoxidharz-Amin-Adduktes werden 20 g Eisessig (98 bis 100 %-ig) und 1808 g voll entsalztes Wasser unter Rühren zugegeben, wobei die Temperatur der Mischung während der Wasserzugabe auf < 30° C abkühlt.

**Herstellungsbeispiel B)**

Kombination eines kationischen Harzes mit Polyester

Zur Herstellung eines Epoxidharz-Amin-Adduktes werden gemäß EP-A-12 463, Seite 17, Example I(b) 391 g Diethanolamin, 189 g 3-(N,N-Dimethylamino)-propylamin und 1147 g eines Adduktes aus 1,6-Diaminohexan und Cardura E 10 (eingetragenes Warenzeichen) (Molverhältnis 1 : 2) zu 5274 g Epoxidharz auf Basis Bisphenol A (Epoxid-Äquivalentgewicht etwa 472) in 2999 g Ethylenglykolmonoethylether gegeben. Die Mischung wird 4 Stunden lang unter Rühren bei 85 bis 90° C und dann 1 Stunde lang bei 120° C gehalten.

In einem separaten Ansatz werden zur Herstellung des Polyesters gemäß EP-A-12 463, Seite 17, Example II(a) 200 g Trimellithsäureanhydrid bei 100° C in 194 g Ethylenglykolmonobutylether gelöst und mit 573 g Cardura E 10 (eingetragenes Warenzeichen) sowie mit 1.8 g Benzyldimethylamin vermischt und auf 120° C unter Rühren erwärmt und gehalten, bis die Säurezahl unter 1,1 mg/g Festharz gesunken ist.

Die Polyesterlösung wird mit der Lösung des Epoxidharz-Amin-Adduktes gemischt.

**Herstellungsbeispiel C)**

Anionisches Harz

647 g eines Reaktionsproduktes aus 80 Gew.-% Lackleinöl und 20 Gew.-% Maleinsäureanhydrid werden mit 162 g Kolophonium-Maleinsäureanhydrid-Harz (Alresat KM 201, eingetragenes Warenzeichen) bei 160° C umgesetzt und unter 100° C in 82 g Triethylamin und 1946 g voll entsalztem Wasser gelöst.

## Beispiel 1

59.1 kg eines Epoxidharzes vom Bisphenol A-Typ mit einem Epoxidäquivalentgewicht von 890 (Beckopox EP 304, eingetragenes Warenzeichen), 39.2 kg eines Cumaron-Inden-Harzes mit Schmelzpunkt (Kapillarmethode) von 94 bis 95°C, 92 kg eines mit ε-Caprolactam blockierten Diphenylmethan-4,4'-diisocyanates vom Typ Desmodur 44 M (eingetragenes Warenzeichen), 22.8 kg eines mit ε-Caprolactam blockierten Isophorondiisocyanates (IPDI-Addukt B 1065, eingetragenes Warenzeichen), 4 kg Benzoin und 84 kg eines Masterbatch aus 1 kg Dibutylzinndilaurat und 83 kg Beckopox EP 304 (eingetragenes Warenzeichen) werden unter Rühren in ein Gemisch aus 416.6 kg voll entsalztem Wasser, 8 kg Surfynol 104 (eingetragenes Warenzeichen) und 16.3 kg des im Herstellungsbeispiel A) genannten kationischen Bindemittels eingetragen und auf einer Rotor-Statormühle unter Zuhilfenahme von Kühlsole bei einer Spaltweite von 2 bis 0.05 mm, 30 Minuten lang im Umlauf bei einer Leistung von etwa 3000 l/h und einer auf 32°C ansteigenden Mahltemperatur vermahlen, wobei eine Kornverteilung gemäß Tabelle 1 erhalten wird. Beckopox EP 304, Cumaron-Inden-Harz, IPDI-Addukt B 1065 und Masterbatch liegen vor der Vermahlung als Chips, Benzoin als Pulver vor.

Der auf diese Art erhaltenen Wasser-Harz-Schlämme werden unter Rühren 64 kg Titandioxid vom Rutiltyp, 2 kg Ruß, 20 kg Siliciumdioxid (Korngröße maximal 5 μm, BET-Oberfläche von 400), 28 kg kationisches Bindemittel gemäß Herstellungsbeispiel A) und 99.6 kg voll entsalztes Wasser zugegeben. Das Gemenge wird auf einer Rührwerkskugelmühle mit Perlenfüllung und einer Leistung von 200 kg/h in 3 Einzelpassagen feinvermahlen, wobei eine Kornverteilung gemäß Tabelle 2 erhalten wird.

### Tabelle 1

| Meßbereichsgrenzen (μm) | | | % Anteil (Kumulativ) |
|---|---|---|---|
| bis | 1 | μm | 5,7 % |
| " | 1,5 | " | 7,3 % |
| " | 2 | " | 11,8 % |
| " | 3 | " | 16,3 % |
| " | 4 | " | 21,2 % |
| " | 6 | " | 24,6 % |
| " | 8 | " | 30,6 % |
| " | 12 | " | 35,4 % |
| " | 16 | " | 41,8 % |
| " | 24 | " | 49,5 % |
| " | 32 | " | 56,9 % |
| " | 48 | " | 72,- % |
| " | 64 | " | 81,2 % |
| " | 96 | " | 95,9 % |
| " | 128 | " | 96,9 % |
| " | 192 | " | 100,- % |

### Tabelle 2

| Meßbereichsgrenzen (μm) | | | % Anteil (Kumulativ) |
|---|---|---|---|
| bis | 1 | μm | 19,5 % |
| " | 1,5 | " | 23,2 % |
| " | 2 | " | 30,6 % |
| " | 3 | " | 39,6 % |
| " | 4 | " | 51,4 % |
| " | 6 | " | 61,8 % |
| " | 8 | " | 77,1 % |
| " | 12 | " | 90,9 % |
| " | 16 | " | 98,5 % |
| " | 24 | " | 99,8 % |
| " | 32 | " | 100,- % |
| " | 48 | " | - |
| " | 64 | " | - |
| " | 96 | " | - |
| " | 128 | " | - |
| " | 192 | " | - |

## Beispiel 2

In 990 g der naßgemahlenen Wasser-Harz-Pigment-Schlämme, die nach Beispiel 1 hergestellt wurden, werden 10 g Siliciumdioxid mit einer mittleren Teilchengröße von 5 μm und mit einem Porenvolumen von 1,2 ml/g mit Hilfe eines Dissolvers eingerührt.

Die Wasser-Harz-Pigment-Schlämme weist eine Lagerbeständigkeit von mindestens 3 Monaten auf und setzt in dieser Zeit nicht ab.

## Beispiel 3

1222 g voll entsalztes Wasser werden unter Rühren mit 630 g kationischem Harz von Herstellungsbeispiel A) und anschließend mit 597 g der nach Beispiel 1 hergestellten Schlämme vermischt. Nach einer 15 Minuten lang dauernden Ultraschall-Behandlung gemäß EP-A-63 314 werden 551 g voll entsalztes Wasser zugegeben.

Das ETL-Bad (Elektrotauchlackier-Bad) wird mit Essigsäure auf einen pH-Wert von 5.2 eingestellt,

Aus dem ETL-Bad werden auf zinkphosphatierten Stahlblechen Lackfilme kathodisch abgeschieden, mit Wasser gespült und bei erhöhter Temperatur (10 Minuten 100°C Trockenschrank) vorgeliert sowie bei Einbrenntemperatur (15 Minuten 175°C Ojekttemperatur) gehärtet.

Die Beschichtungen, die eine glatte, glänzende Oberfläche und eine Schichtdicke von etwa 45 μm aufweisen, werden mit einem Kreuzschnitt versehen und einer Salzsprühbelastung nach DIN 50 021 unterworfen. Nach 1000 Stunden wird eine Unterwanderung am Schnitt von weniger als 1 mm festgestellt. Der Film ist frei von Flächenrost und Blasen.

## Beispiel 4

In gleicher Weise wie im Beispiel 3 beschrieben wird ein ETL-Bad aus 1222g voll entsalztem Wasser, 630 g kationischem Harz von Herstellungsbeispiel A), 585 g Schlämme gemäß Beispiel 2 und 563 g voll entsalztem Wasser hergestellt.

Die kathodisch beschichteten und nach Vorgelierung eingebrannten Lackfilme aus diesem Bad sind glatt und weniger glänzend als die Lackfilme vom Beispiel 3. Beschichtungen mit Schichtdicken von 43 bis 48 µm werden mit Kreuzschnitt versehen und wie im Beispiel 3 in der Salzsprühkammer 1000 Stunden lang belastet. Der Film bleibt frei von Blasen und Flächenrost. Die Unterwanderung am Schnitt beträgt weniger als 1 mm.

## Beispiel 5

725 g der nach Herstellungsbeispiel B) gefertigten Kombination werden unter Rühren mit 3 g Bleioctoat (Bleigehalt 31 %) und mit 41 g Ameisensäure, 50 %-ig in Wasser, versetzt.

Unter weiterem Rühren werden 3336 g voll entsalztes Wasser und 910 g der nach Beispiel 1 hergestellten Schlämme zugegeben. Nach einer 15 Minuten dauernden Ultraschall-Behandlung werden aus dem 30°C warmen ETL-Bad mit 100 V und 2 Minuten Beschichtungszeit zinkphosphatierte Stahlbleche kathodisch beschichtet. Der gleichmäßige Strukturlack, der nach Vorgelierung (10 Minuten 100°C) und Einbrennen (20 Minuten 180°C) erhalten wird, ist hart, elastisch und weist eine Schichtdicke von 23 bis 26 µm auf.

## Beispiel 6

Nach der gleichen Herstellungsmethode und ähnlichem Rezept wie im Beispiel 1 beschrieben wird eine Harz-Wasser-Schlämme ohne Cumaron-Inden-Harz, aber mit dem anionischen Harz von Herstellungsbeispiel C) hergestellt.

Als Pigmente werden für die Vermahlung auf der Perlmühle zu der Wasser-Harz-Schlämme nur 2 kg Ruß, 4 kg Aluminiumsilikat und 1,2 kg Siliciumdioxid verwendet.

Aus 600 g dieses Konzentrats wird ein ETL-Bad mit 800 g anionischem Harz von Herstellungsbeispiel C) und 900 g voll entsalztem Wasser hergestellt und auf 25°C temperiert. Sowohl unvorbehandelte als auch zinkphosphatierte Stahlbleche werden anodisch 2 Minuten lang mit 280 V beschichtet. Die Lackfilme zeigen nach dem Vorgelieren und Einbrennen eine glatte, harte und elastische Oberfläche mit Schichtdicken von 18 bis 20 µm auf beiden Substraten.

Auf der Innenseite einer Umgriffmanschette aus 2 Stahlblechen Bonder 858 (Zinkphosphatierung, eingetragenes Warenzeichen) mit 190 mm Länge, 104 mm Breite und 3 mm Abstand wird nach 3 Minuten dauernder Abscheidung bei 280 V eine Gesamtreichweite von 17 cm und eine 5 µm - Trockenschichtdicke bei 12 cm vom unteren Blechrand erreicht.

## Patentansprüche

1. Verfahren zur Herstellung von lagerfähigen Konzentraten enthaltend Wasser, nicht gelöste feinverteilte Kunstharze in einer Menge von 10 bis 60 Gew.-%, bezogen auf das Gesamtgewicht des Konzentrats, und gelöste Kunstharze in einer Menge von 0.5 bis 10 Gew.-% Festkörper, bezogen auf das Gesamtgewicht des Konzentrats, als Lackbindemittel, Pigmente, sowie gegebenenfalls lacktechnische Zusatzstoffe und gegebenenfalls organische Lösungsmittel durch Naßvermahlung in mehreren Stufen, welche Konzentrate zur Herstellung von Lacken mit flüssigen Lackbindemitteln und gegebenenfalls üblichen lacktechnischen Zusatzstoffen, Wasser und gegebenenfalls organischen Lösungsmitteln verdünnt werden, dadurch gekennzeichnet, daß

a) in einer ersten Mahlstufe die nicht gelösten Kunstharze, von denen mindestens 80 Gew.-% mit einer Teilchengröße von 500 µm bis 20 mm vorliegen, im Gemisch mit Wasser, wobei der Gehalt an Feststoffen 30 bis 70 Gew.-%, bezogen auf die Gesamtmenge des Gemisches beträgt, sowie 0 bis 60 Gew.-% der gelösten ionischen Kunstharze (Festkörper) bis zu einer Teilchengröße von weniger als 200 µm, vorzugsweise von weniger als 100 µm vermahlen werden,

b) 40 bis 100 Gew.-% der gelösten ionischen Kunstharze (Festkörper) und Pigmente zugesetzt werden und das Gemisch in einer zweiten Mahlstufe vermahlen wird, bis 95 % aller Teilchen eine Teilchengröße von weniger als 15 µm aufweisen.

2. Verfahren nach Anspruch 1, dadurch gekennzeichnet, daß in der Stufe a) lacktechnische Zusatzstoffe und/ oder organische Lösungsmittel mit vermahlen werden.

3. Verfahren nach Anspruch 1 oder 2, dadurch gekennzeichnet, daß in der Stufe b) lacktechnische Zusatzstoffe und/oder organische Lösungsmittel mit vermahlen werden.

4. Verfahren nach einem oder mehreren der Ansprüche 1 bis 3, dadurch gekennzeichnet, daß dem in der Stufe b) erhaltenen Mahlgut solche feinteiligen Pigmente sowie gegebenenfalls lacktechnische Zusatzstoffe zugemischt werden, die den Vermahlungsvorgang stören würden und/ oder nicht vermahlen werden sollen.

5. Verfahren nach einem oder mehreren der Ansprüche 1 bis 4, dadurch gekennzeichnet, daß mehrere unterschiedliche feste Kunstharze eingesetzt werden.

6. Verfahren nach Anspruch 5, dadurch gekennzeichnet, daß mehrere unterschiedliche feste Kunstharze jeweils getrennt in den Stufen a) und b) vermahlen und die Mahlgute miteinander vermischt werden.

7. Verfahren nach einem oder mehreren der Ansprüche 1 bis 6, dadurch gekennzeichnet, daß in Stufe a) in Rotor-/ Statormühlen, insbesondere Kolloidmühlen vermahlen wird.

8. Verfahren nach einem oder mehreren der Ansprüche 1 bis 7, dadurch gekennzeichnet, daß in Stufe b) in Rührwerkskugelmühlen, insbesondere Perlmühlen vermahlen wird.

9. Verfahren nach einem oder mehreren der Ansprüche 1 bis 8, dadurch gekennzeichnet, daß in Stufe a) unter vermindertem Druck von 50 bis 800 mbar, vorzugsweise von 200 bis 500 mbar vermahlen wird.

10. Verfahren nach einem oder mehreren der Ansprüche 1 bis 9, dadurch gekennzeichnet, daß die Vermahlung unter Kühlung erfolgt.

11. Verfahren nach einem oder mehreren der Ansprüche 1 bis 10, dadurch gekennzeichnet, daß das Konzentrat 30 bis 50 Gew.-% nicht gelöste fein verteilte Kunstharze enthält.

12. Verfahren nach einem oder mehreren der Ansprüche 1 bis 11, dadurch gekennzeichnet, daß das Konzentrat 0,5 bis 5 Gew.-% Festkörper gelöste Kunstharze enthält.

13. Verwendung der nach dem Verfahren gemäß einem oder mehreren der Ansprüche 1 bis 12 hergestellten lagerfähigen Konzentrate zur Herstellung von, insbesondere elektrophoretisch abscheidbaren, Überzugsmitteln.

## Claims

1. A process for the production of storable concentrates containing water, undissolved finely divided synthetic resins in a quantity of 10 to 60 % by weight, based on the total weight of the concentrate, and dissolved synthetic resins in a quantity of 0.5 to 10 % by weight solids, based on the total weight of the concentrate, as lacquer binders, pigments and, optionally, lacquer additives and, optionally, organic solvents by wet grinding in several stages, the concentrates being diluted with liquid lacquer binders and, optionally, standard lacquer additives, water and optionally organic solvents for the preparation of lacquers, characterized in that

a) in a first grinding stage, the undissolved synthetic resins, of which at least 80 % by weight have a particle size of 500 μm to 20 mm, are ground in admixture with water, the solids contents being from 30 to 70 % by weight, based on the total quantity of mixture, and 0 to 60 % by weight of the dissolved ionic synthetic resins (solids) to a particle size of less than 200 μm and preferably less than 100 μm,

b) 40 to 100 % by weight of the dissolved ionic synthetic resins (solids) and pigments are added and the mixture is ground in a second grinding stage until 95 % of all the particles have a particle size of less than 15 μm.

2. A process as claimed in claim 1, characterized in that lacquer additives and/or organic solvents are co-ground in stage a).

3. A process as claimed in claim 1 or 2, characterized in that lacquer additives and/or organic solvents are co-ground in stage b).

4. A process as claimed in one or more of claims 1 to 3, characterized in that finely divided pigments and, optionally, lacquer additives which would adversely affect the grinding process and/or which are not be ground are added to the ground product obtained in step b).

5. A process as claimed in one or more of claims 1 to 4, characterized in that several different solid synthetic resins are used.

6. A process as claimed in claim 5, characterized in that several different solid synthetic resins are each separately ground in stages a) and b) and the ground products are mixed with one another.

7. A process as claimed in one or more of claims 1 to 6, characterized in that, in stage a), grinding is carried out in rotor/stator mills, particularly colloid mills.

8. A process as claimed in one or more of claims 1 to 7, characterized in that, in stage b), grinding is carried out in stirrer-equipped ball mills, particularly bead mills.

9. A process as claimed in one or more of claims 1 to 8, characterized in that, in stage a), grinding is carried out under a reduced pressure of 50 to 800 mbar and preferably under a reduced pressure of 200 to 500 mbar.

10. A process as claimed in one or more of claims 1 to 9, characterized in that grinding is carried out with cooling.

11. A process as claimed in one or more of claims 1 to 10, characterized in that the concentrate contains 30 to 50 % by weight undissolved, finely divided synthetic resins.

12. A process as claimed in one or more of claims 1 to 11, characterized in that the concentrate contains 0.5 to 5 % by weight, based on solids, of dissolved synthetic resins.

13. The use of the storable concentrates prepared by the process claimed in one or more of claims 1 to 12 for the production of coating compositions, particularly electrophoretic coating compositions.

## Revendications

1. Procédé de préparation de concentrés stockables contenant de l'eau, des résines synthétiques finement divisées non dissoutes en une quantité de 10 à 60 % en poids, par rapport au poids total du concentré, et de résines synthétiques dissoutes en une quantité de 0,5 à 10 % en poids de corps solides par rapport au poids total du concentré, comme liants de vernis, des pigments, ainsi qu'éventuellement des additifs de l'industrie des vernis, et le cas échéant des solvants organiques par broyage à l'humidité en plusieurs étapes, concentrés que l'on dilue pour préparer des vernis avec des liants pour vernis liquides et éventuellement des additifs habituels de l'industrie des vernis de l'eau et le cas échéant de solvants organiques, caractérisé en ce que

a) dans une première étape de broyage, on broie les résines synthétiques non dissoutes, dont au moins 80 % en poids se présentent avec une granulométrie allant de 500 μm à 20 mm, mélangées avec de l'eau, où la teneur en corps solides s'élève de 30 à 70 % en poids par rapport à la quantité totale de mélange, ainsi que de 0 à 60 % en poids de résines synthétiques ioniques dissoutes (matières solides) jusqu'à une taille particulaire inférieure à 200 μm, de préférence inférieure à 100 μm,

b) on ajoute de 40 à 100 % en poids des résines ioniques dissoutes (matières solides) et des pigments et on broie le mélange en une seconde étape de broyage, jusqu'à ce que 95 % de toutes les particules présentent une taille particulaire inférieure à 15 μm.

2. Procédé selon la revendication 1, caractérisé en ce que des additifs de l'industrie des vernis et/ou des solvants organiques sont broyés dans l'étape a).

3 Procédé selon les revendications 1 ou 2, caractérisé en ce que des additifs de l'industrie des vernis et/ou des solvants organiques, sont broyés dans l'étape b).

4. Procédé selon une ou plusieurs des revendications 1 à 3, caractérisé en ce qu'on ajoute au mélange de matières broyées obtenu dans l'étape b) des pigments finement divisés ainsi qu'éventuellement les additifs de l'industrie des vernis perturberaient le processus de broyage et/ou qui ne doivent pas être broyés.

5. Procédé selon une ou plusieurs des revendications 1 à 4, caractérisé en ce qu'on utilise plusieurs résines synthétiques solides différentes.

6. Procédé selon la revendication 5, caractérisé en ce qu'on broie plusieurs résines synthétiques solides différentes à chaque fois séparément dans les étapes a) et b) et en ce qu'on mélange les uns aux autres les produits de broyage.

7. Procédé selon une ou plusieurs des revendications 1 à 6, caractérisé en ce que dans l'étape a) on broie dans des broyeurs rotor/stator, en particulier des broyeurs à colloïdes.

8. Procédé selon une ou plusieurs des revendications 1 à 7, caractérisé en ce que dans l'étape b) on broie dans des broyeurs à boulets, en particulier des broyeurs à perles.

9. Procédé selon une ou plusieurs des revendications 1 à 8, caractérisé en ce que dans l'étape a) on broie sous pression réduite, de 50 à 800 mbar, de préférence de 200 à 500 mbar.

10. Procédé selon une ou plusieurs des revendications 1 à 9, caractérisé en ce qu'on effectue le broyage en refroidissant.

11. Procédé selon une ou plusieurs des revendications 1 à 10, caractérisé en ce que le concentré contient de 30 à 50 % en poids de résines synthétiques finement divisées non dissoutes.

12. Procédé selon une ou plusieurs des revendications 1 à 11, caractérisé en ce que le concentré contient de 0,5 à 5 % en poids de matières solides résines synthétiques dissoutes.

13. Application des concentrés stockables préparés selon le procédé d'une ou plusieurs des revendications 1 à 12 à la préparation de revêtements, en particulier déposables par électrophorèse.